Europäisches Patentamt

European Patent Office

Office européen des brevets

(19)

(11) Numéro de publication: **0 291 609**
A1

(12) ## DEMANDE DE BREVET EUROPEEN

(21) Numéro de dépôt: 87401128.1

(22) Date de dépôt: 20.05.87

(51) Int. Cl.4: **B24B 39/00 , C21D 7/06 , B23P 9/04**

(43) Date de publication de la demande:
23.11.88 Bulletin 88/47

(84) Etats contractants désignés:
BE CH DE ES LI SE

(71) Demandeur: INTERCONTROLE
4 à 10 Place Vauban Silic 433
F-94583 Rungis Cedex(FR)

Demandeur: ELECTRICITE DE FRANCE
Service National
2, rue Louis Murat
F-75008 Paris(FR)

(72) Inventeur: Druelle, Philippe
7, rue de Verdun
F-93460 Gournay Sur Marne(FR)
Inventeur: Vidal, Pierre
6, Allée du Clos de la Forêt
F-77690 Montigny Sur Loing(FR)
Inventeur: Saglio, Robert
9, rue des Marchais
F-92160 Antony(FR)
Inventeur: Tocci, Jean-Louis
1, rue P.Masse Maison
F-75014 Paris(FR)

(74) Mandataire: Mongrédien, André et al
c/o BREVATOME 25, rue de Ponthieu
F-75008 Paris(FR)

(54) Installation pour le detensionnement de tubes dudgeonnes, notamment dans un échangeur de chaleur.

(57) Le détensionnement de tubes dudgeonnés est réalisé au moyen d'une installation utilisant la technique du micromartelage rotatif. L'outil (28) est constitué d'une cage (36) que l'on déplace selon une trajectoire en hélice centrée sur l'axe (ZZ') du tube (20) à traiter. Cette cage (36) supporte de façon tournante un arbre (38) dont l'axe est parallèle et excentré par rapport à celui de la cage. L'axe (38) porte des lames souples (42), appelées brosses, dont les extrémités sont équipées de billes (44) venant marteler la paroi intérieure du tube lors de la rotation de l'arbre. La trajectoire en hélice assure une répartition régulière des impacts et, par conséquent, un traitement uniforme de la surface.

FIG.3

# Installation pour le détensionnement de tubes dudgeonnés, notamment dans un échangeur de chaleur.

La présente invention concerne une installation conçue pour résorber les tensions mécaniques induites dans un tube par une opération de dudgeonnage.

Une telle installation est particulièrement adaptée au détensionnement des extrémités des tubes des échangeurs de chaleur, et notamment des générateurs de vapeur, en particulier lorsque ces appareils sont utilisés dans un réacteur nucléaire. Elle n'est cependant pas limitée à cette application.

Dans les échangeurs de chaleur, l'échange thermique entre les deux fluide s'effectue généralement au travers d'un faisceau de tubes de grande longueur dans lequel circule l'un des fluides, alors que l'autre fluide circule autour des tubes. A leurs extrémités, les tubes sont fixés de façon étanche sur une plaque de forte épaisseur dite "plaque à tubes". Le plus souvent, cette fixation étanche est obtenue d'une part par soudure de l'extrémité du tube sur la face externe de la plaque et, d'autre part, par dudgeonnage du tube sur une partie au moins de l'épaisseur de la plaque à tubes, cette partie étant généralement située au voisinage de la face interne de la plaque.

Le dudgeonnage des tubes dans la plaque à tubes induit dans les tubes des contraintes mécaniques généralement localisées à proximité de la peau intérieure de ces tubes.

Dans certains cas, ces contraintes mécaniques sont sans conséquence sur le fonctionnement de l'échangeur et elles sont donc admissibles.

Cependant, lorsque les fluides circulant dans l'échangeur sont corrosifs, comme c'est notamment le cas dans les réacteurs nucléaires, ces contraintes conduisent à la création de microfissures pouvant parfois traverser complètement le tube. Celui-ci devient alors inutilisable et doit être obturé. Cela nécessite d'effectuer des opérations de contrôle suivies d'opérations d'obturation des tubes relativement fréquentes. De plus, l'obturation d'un grand nombre de tubes d'un échangeur de chaleur conduit à faire baisser dans les mêmes proportions son rendement.

Il est donc souhaitable de disposer d'une installation permettant de résorber les contraintes induites dans les tubes lors du dudgeonnage.

Une première technique connue pour effectuer le détensionnement de tubes dudgeonnés est la technique du microbillage (en anglais "Shotpeening") développée par la Société FRAMATOME. Cette technique consiste introduire dans la partie dudgeonnée du tube une tête d'injection par laquelle des microbilles d'Inconel (Marque déposée) sont projetées en vrac contre la paroi intérieure du tube par de l'air comprimé. Le martelage qui en résulte résorbe les contraintes de peau interne.

Cette technique du microbillage est particulièrement efficace lorsque les conditions dans lesquelles elle est appliquée sont satisfaisantes. Cependant, le maintien de cette efficacité nécessite de contrôler de façon très stricte la température et d'injecter les microbilles en l'absence de toute humidité. De plus, lorsque cette technique est utilisée sur un échangeur de chaleur équipant un réacteur nucléaire en service, les microbilles ayant servi à réaliser le détensionnement des tubes sont contaminées. Compte tenu du nombre de tubes équipant généralement un échangeur de chaleur, un volume de déchets important nécessitant un traitement ultérieur est ainsi créé. Le coût de cette technique s'en trouve sérieusement accru.

Une autre technique connue pour réaliser le détensionnement de tubes dudgeonnés est la technique du micromartelage rotatif (en anglais "rotopeening") développée par la Société WESTINGHOUSE. Selon cette technique, décrite dans le document FR-A-2 511913, le détensionnement des tubes dudgeonnés est réalisé en introduisant successivement dans chacun des tubes un outil assurant le martelage de la paroi intérieure du tube. Cet outil se compose de lames souples (généralement appelées "brosses") montées sur un arbre tournant et portant des microbilles de carbure de tungstène à leurs extrémités. L'arbre tournant est supporté de façon excentrée par une cage cylindrique centrée par des paliers à l'intérieur du tube à traiter. Au niveau de chacune des brosses, la cage présente une fenêtre ouverte dans sa partie la plus proche de l'arbre. La rotation de ce dernier entraîne donc le martelage des parties du tube qui se trouvent en face de ces fenêtres par les microbilles portées par les brosses. Afin que ce martelage s'effectue sur toute la circonférence du tube, la cage est elle-même animée d'un mouvement de rotation relativement lent autour de son axe propre. Enfin, le balayage de toute la longueur de la zone dudgeonnée est obtenu en imprimant à la cage un mouvement alternatif de va-et-vient parallèlement à son axe.

Par rapport à la technique du microbillage, cette technique du micromartelage rotatif présente l'avantage essentiel de ne pas créer de déchets nécessitant un traitement particulier et de n'être sensible ni à la température ni à l'humidité.

Cependant, compte tenu de la superposition d'un mouvement de rotation et d'un mouvement axial alternatif de va-et-vient de la cage pour effectuer les balayages circonférentiel et longitudinal de la zone dudgeonnée, la répartition des impacts des microbilles sur la paroi intérieure du tube n'est pas homogène. Cela conduit soit à rendre cette technique en partie inefficace, soit à un traitement dont la durée est trop longue pour être satisfaisante d'un point de vue industriel.

La présente invention constitue un perfectionnement à la technique du micromartelage rotatif, ce perfectionnement ayant pour principal objectif d'assurer une répartition régulière des impacts des microbilles sur la paroi intérieure des tubes, afin que le nombre minimum d'impacts nécessaire pour obtenir le traitement complet de la surface soit atteint en un temps suffisamment court pour être acceptable d'un point de vue industriel.

A cet effet et conformément à l'invention, il est proposé une installation pour le détensionnement de tubes dudgeonnés, comprenant :
- un outil constitué d'une cage cylindrique ayant un axe donné, d'un arbre monté tournant à l'intérieur de ladite cage autour d'un axe parallèle et décalé par rapport à l'axe de la cage, et d'au moins une lame souple fixée sur ledit arbre en face d'une fenêtre ouverte dans une partie de la cage proche de l'axe de l'arbre, ladite lame portant au moins une rangée de microbilles à son extrémité,
- des moyens de commande de martelage pour entraîner ledit arbre en rotation autour de son axe,
- des moyens de commande de balayage pour entraîner la cage en rotation et en translation à l'intérieur d'un tube à traiter, ayant un axe parallèle aux axes de la cage de l'arbre,
cette installation étant caractérisée en ce que les moyens de commande de balayage déplacent la cage selon une trajectoire en hélice centrée sur l'axe du tube à traiter.

Le déplacement de la cage selon une trajectoire en hélice permet d'assurer une répartition homogène, également en hélice, des impacts des microbilles sur la paroi intérieure des tubes. Le martelage de la totalité de la partie dudgeonnée est ainsi obtenu avec un nombre minimum d'impacts et, par conséquent, en un temps relativement court.

Dans un mode de réalisation préféré de l'invention, les moyens de commande de balayage comprennent une tige filetée solidarisée en rotation et en translation de ladite cage, un écrou monté dans un organe support apte à être immobilisé par rapport au tube, cet écrou étant vissé sur la tige filetée, et des moyens de commande de rotation pour entraîner la tige filetée en rotation. Le pas de la trajectoire en hélice est alors déterminé par les filets complémentaires de la tige filetée et de l'écrou.

Selon un autre aspect particulièrement intéressant de l'invention, l'installation comprend également des moyens pour décaler la trajectoire en hélice d'environ un demi-pas de cette hélice, selon que la translation de la cage selon son axe s'effectue dans l'un ou l'autre sens. De cette manière, pour chaque bille, les impacts formés lors de la trajectoire retour de l'outil sont situés à égale distance des impacts formés lors de la trajectoire aller. L'écart maximal entre tous les impacts s'en trouve minimisé dans tous les cas, quels que soient les écarts existant entre la distance réelle et la distance moyenne séparant deux microbilles voisines.

Dans le mode de réalisation préféré de l'invention, les moyens pour décaler la trajectoire en hélice d'environ un demi-pas de l'hélice consistent en des moyens pour faire tourner l'écrou d'environ un demi-tour dans l'organe support lors d'une inversion de sens de rotation des moyens de commande de rotation.

Conformément à un autre aspect intéressant de l'invention, le pas $p$ de l'hélice est déterminé en fonction de la distance moyenne $m$ séparant les microbilles d'une même rangée, afin que les impacts ne se superposent pas. A cet effet, le rapport $p/m$, exprimé en %, est choisi autour des valeurs suivantes : 10, 22, 28, 37, 43, 56, 62, 71, 78 et 88. Dans le mode de réalisation préféré, on donne au rapport $p/m$ une valeur d'environ 56% correspondant au meilleur compromis entre un pas élevé (donc un temps de traitement relativement court) et une possibilité de fluctuation importante des distances entre les microbilles, par rapport à la valeur moyenne $m$.

Afin d'éviter le coincement d'une microbille accidentellement détachée de la lame qui la supporte, le diamètre des microbilles est de préférence inférieur à la différence entre le diamètre intérieur du tube et le diamètre extérieur de la cage.

De préférence, afin d'éviter que le martelage de la partie des tubes située immédiatement au-delà de la plaque à tubes n'induise des contraintes mécaniques sur la peau extérieure des tubes à cet endroit, l'arbre comporte un prolongement au-delà de l'extrémité de la cage, ce prolongement supportant une deuxième lame souple portant des microbilles à son extrémité. Le caractère libre de cette lame réduit la force des impacts à ce niveau et permet ainsi d'atteindre le but recherché.

Afin que les impacts des billes sur la paroi intérieure des tubes soient indépendants des variations éventuelles du diamètre des tubes dans la partie dudgeonnée, la cage porte au moins deux patins élastiques aptes à prendre appui à l'intérieur d'un tube pour appliquer la génératrice de la cage la plus proche de l'axe de l'arbre contre le tube. La distance entre la paroi intérieure des tubes et l'axe de rotation des lames souples est ainsi préservée quel que soit le diamètre des tubes.

**0 291 609**

Lorsque l'installation selon l'invention est adaptée au détensionnement de tubes fixés dans une plaque à tubes, elle comprend de préférence un sous-ensemble de commande apte à être monté sur un dispositif de supportage et de positionnement et portant les moyens de commande de martelage et les moyens de commande de rotation, un sous-ensemble porte-outil apte à être monté sur le dispositif de supportage, un arbre d'entraînement flexible reliant les moyens de commande de martelage à l'arbre de l'outil, et une gaine d'entraînement flexible entourant l'arbre d'entraînement, reliant les moyens de commande de rotation à la cage et comprenant la tige filetée.

Dans un mode de réalisation préféré de l'invention, le sous-ensemble porte-outil porte des moyens pour introduire et extraire l'outil, ces moyens comprenant un pignon d'entraînement qui s'engrène sur une surface crénelée formée sur ledit organe de supportage et sur une enveloppe flexible placée autour de la gaine d'entraînement flexible, entre cet organe support et la cage de l'outil.

De préférence, des moyens de démontage de l'outil sont prévus, par exemple entre la cage et la gaine d'entraînement flexible et entre l'arbre d'entraînement et l'arbre de l'outil.

Enfin, l'outil peut également être formé de plusieurs modules comprenant chacun un élément de cage et un élément d'arbre, les éléments de cage et les éléments d'arbre des modules adjacents étant reliés par des joints de cardan logés les uns dans les autres.

On décrira maintenant, à titre d'exemple non limitatif, un mode de réalisation préféré de l'invention en se référant aux dessins annexés dans lesquels :

- la figure 1 est une vue en coupe verticale représentant de façon très schématique une partie de l'extrémité inférieure d'un échangeur de chaleur et illustrant le détensionnement des extrémiés des tubes de cet échangeur à l'aide d'une installation conforme à l'invention,

- la figure 2 est une vue de dessous représentant de façon schématique l'installation de la figure 1 lors de l'opération de détensionnement des tubes de l'échangeur,

- la figure 3 est une vue en coupe longitudinale représentant à plus grande échelle l'outil utilisé dans l'installation des figures 1 et 2,

- la figure 4 est une vue en coupe et à plus grande échelle prise selon la ligne IV-IV de la figure 3,

la figure 5 est une vue en coupe schématique illustrant le principe de génération des impacts grâce à l'outil représenté sur les figures 3 et 4,

- la figure 6 est une vue schématique, de côté et en coupe partielle, représentant le sous-ensemble porte-outil assurant l'introduction des outils dans les tubes dans l'installation selon l'invention,

- la figure 7 est une vue schématique de côté et en coupe partielle, représentant le sous-ensemble de commande assurant l'entraînement en rotation à distance de l'arbre et de la cage de l'outil, dans l'installation selon l'invention,

- la figure 8 est une vue de dessous schématique du sous-ensemble de la figure 7,

- la figure 9 est une vue en coupe et à plus grande échelle représentant les moyens pour créer le mouvement hélicoïdal de la cage et pour décaler d'un demi-pas le mouvement retour par rapport au mouvement aller,

- la figure 10 représente schématiquement le trajet en hélice parcouru par l'outil à l'intérieur d'un tube dudgeonné, et

- la figure 11 est une courbe représentant, en % de $\underline{m}$ les distances maximum $\underline{d}$ séparant deux impacts selon une même génératrice du tube, en fonction du rapport p/m, exprimé aussi en %, p étant le pas de l'hélice parcouru par l'outil et $\underline{m}$ la distance moyenne séparant deux microbilles sur les lames souples de l'outil.

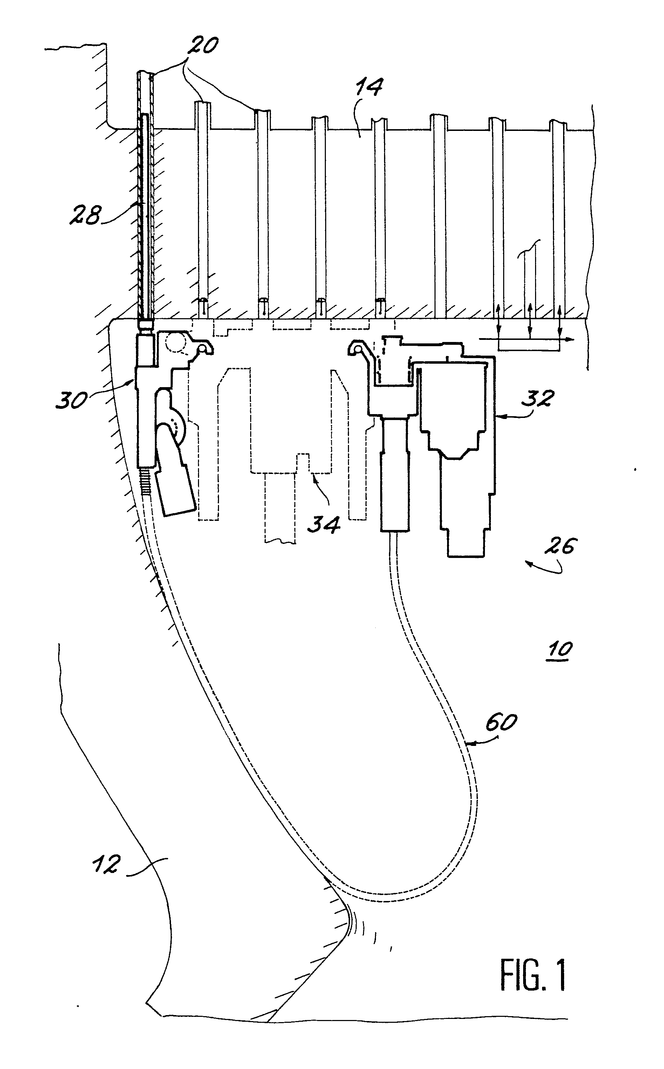

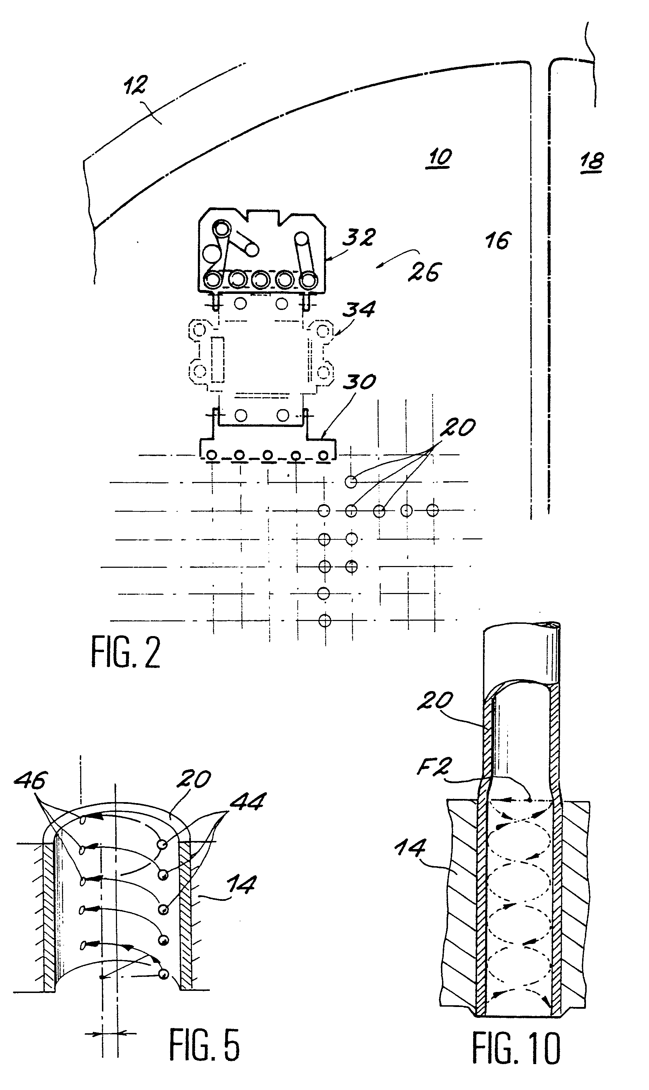

Sur les figures 1 et 2, on a représenté une partie de l'extrémité inférieure d'un générateur de vapeur assurant le transfert thermique entre l'eau du circuit primaire et l'eau du circuit secondaire dans un réacteur nucléaire à eau pressurisée. Ce générateur de vapeur ne fait pas partie de l'invention et ne sera donc pas décrit plus en détail.

Pour la bonne compréhension de l'invention, on rappellera simplement que l'eau du circuit primaire est admise à l'intérieur du générateur de vapeur par une chambre d'entrée d'eau 10 formée entre le fond hémisphérique 12 de l'enveloppe extérieure de l'échangeur, une plaque à tubes horizontale 14 et une cloison verticale 16 (figure 2) séparant cette chambre d'entrée 10 d'une chambre de sortie 18 identique à la chambre 10. Le transfert de l'eau du circuit primaire entre la chambre 10 et la chambre 18 s'effectue à l'intérieur d'un faisceau de tubes en U 20 dont les extrémités sont fixées dans la plaque à tubes 14 de façon à déboucher respectivement dans les chambres 10 et 18.

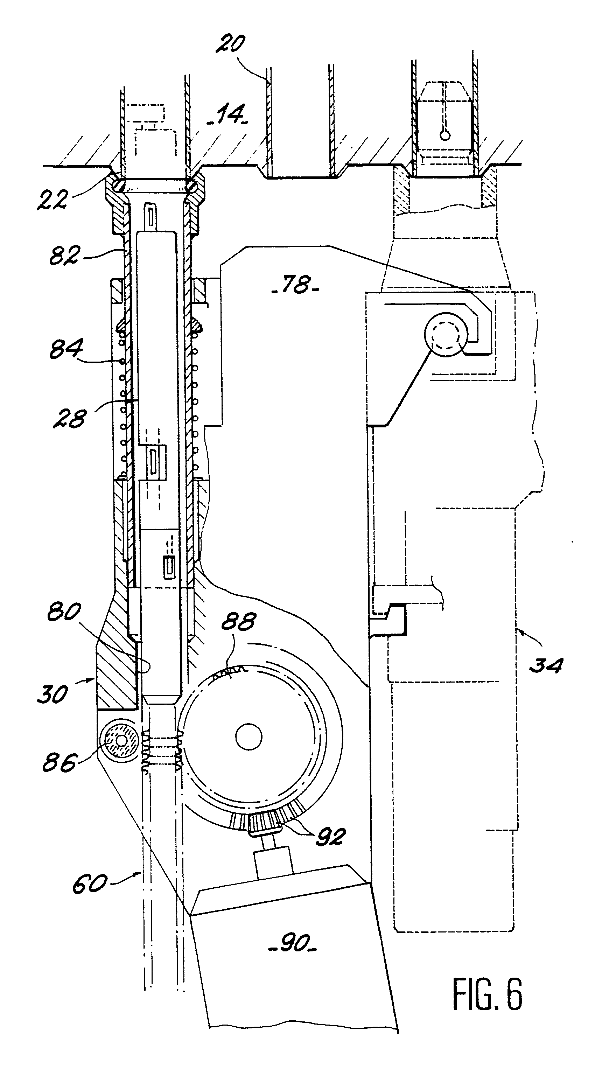

Habituellement, les extrémités de chacun des tubes 20 sont fixées dans la plaque à tubes 14 à la fois au moyen d'une soudure 22 (figure 6) située au niveau de la face inférieure de la plaque 14 et par dudgeonnage au moins partiel de la partie des tubes située à l'intérieur de la plaque 14. Dans le cas d'un dudgeonnage seulement partiel, la partie dudgeonnée est située à proximité de la face supérieure de la plaque à tubes 14.

Afin d'éviter que les contraintes induites par le dudgeonnage dans la peau interne des tubes ne conduisent à une fissuration des tubes sous l'effet de la corrosion, on effectue conformément à l'invention le détensionnement de la partie dudgeonnée des tubes 20 à l'aide d'une installation désignée dans son ensemble par la référence 26 sur les figures 1 et 2.

Cette installation comprend un ou plusieurs outils 28 (cinq dans le mode de réalisation représenté), un sous-ensemble porte-outils 30 permettant d'introduire les outils 28 dans les tubes, un sous-ensemble de commande 32 assurant la commande des mouvements des outils et un ou plusieurs ensembles de transmission de mouvements flexibles 60 (cinq dans le mode de réalisation représenté) reliant chaque outil 28 au sous-ensemble 32. Les sous-ensembles 30 et 32 sont prévus pour être portés par un dispositif de supportage et de positionnement 34 conçu pour se déplacer à la surface inférieure de la plaque à tubes 14 en s'accrochant à l'intérieur des extrémités des tubes 20. Un tel dispositif, habituellement appelé "araignée" a été décrit et revendiqué dans le brevet français n° 2 394 374. Il ne fait pas partie de l'invention.

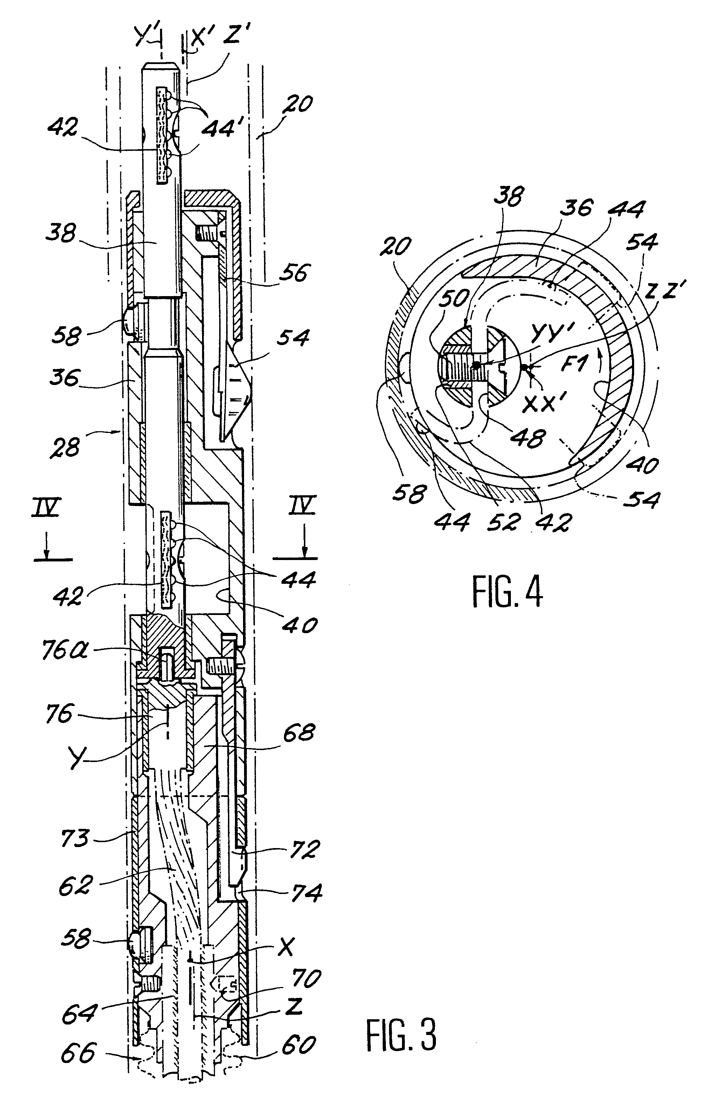

L'un des outils 28 va maintenant être décrit plus en détail en se référant à la figure 3.

Sur cette figure, on voit que l'outil 28 comprend une cage cylindrique 36 dans laquelle est monté de façon tournante un arbre 38 dont l'axe YY' est parallèle et décalé par rapport à l'axe XX' de la cage 36, lui-même parallèle et décalé par rapport à l'axe ZZ' du tube 20 à traiter.

Comme l'illustrent les figures 3 et 4, la cage 36 présente sur sa longueur au moins une fenêtre 40 s'ouvrant sur environ la moitié de la circonférence de la cage, dans la partie de celle-ci la plus proche de l'axe YY'.

Comme on le voit en section sur la figure 4, la fenêtre 40 forme un évidement de section quasi-circulaire autour de l'arbre 38, la distance entre cet arbre et le fond de l'évidement allant en diminuant progressivement dans le sens de rotation de l'arbre 38 indiqué par la flèche F1 sur la figure 4.

A l'intérieur de chaque fenêtre 40, l'arbre 38 porte une lame souple ou brosse 42 dont les extrémités portent sur la face avant en considérant le sens de rotation F1 de l'arbre 38 au moins une rangée de billes ou microbilles alignées 44, en carbure de tungstène. La longueur de chaque moitié de brosse 42 est supérieure à la distance séparant l'axe YY' de la paroi intérieure du tube. Ainsi et comme l'illustre très schématiquement la figure 5, à chaque fois qu'elles quittent l'évidement formé par la fenêtre 40, les billes 44 portées par les brosses 42 viennent heurter la paroi intérieure du tube 20 pour former une empreinte 46.

A titre d'exemple nullement limitatif, les brosses 42 peuvent être réalisées en matière plastique. Les billes 44, dont les dimensions sont conçues pour réaliser des impacts d'environ 100 microns de diamètre, sont alors collées sur ces lames.

Pour éviter qu'une bille accidentellement détachée de sa brosse ne vienne se coincer entre la cage 36 et le tube 20, le diamètre des billes 44 est de préférence inférieur à la différence entre le diamètre intérieur du tube 20 et le diamètre extérieur de la cage 36.

De préférence et comme l'illustre en particulier la figure 4, la fixation des brosses 42 sur l'arbre 38 est réalisée en introduisant ces brosses 42 dans une fente 48 formée à cet effet dans l'arbre 38. La fixation proprement dite est obtenue au moyen d'une vis 50 dont la tête prend appui d'un côté de l'arbre 38 par rapport à la fente 48 et dont l'extrémité filetée se visse dans une pièce 52 reçue de façon coulissante de l'autre côté de l'arbre 38. Cette disposition permet de remplacer facilement les brosses 42.

Selon une caractéristique intéressante de l'invention, l'arbre 38 se prolonge au-delà de l'extrémité de la cage cylindrique 36, pour porter une brosse libre 42' par ailleurs identique à la brosse 42, la fixation de cette brosse 42' sur l'arbre 38 étant réalisée de la même manière que celle de la brosse 42.

Etant donné que la lame 42' est montée librement à l'extrémité de l'arbre 38, les chocs des billes 44' qu'elle supporte contre la paroi intérieure du tube 20 sont moins importants que les chocs des billes 44 contre cette même paroi. Cette caractéristique est avantageuse lorsque la brosse 42' vient marteler la partie du tube 20 qui se trouve immédiatement au-dessus de la plaque à tubes 14. En effet, si le martelage était réalisé à cet endroit avec une force trop importante, on risquerait d'induire des contraintes dans la peau extérieure des tubes, qui ne sont pas enserrés dans la plaque à tubes 14 à ce niveau. L'utilisation de la brosse libre 42' permet donc d'éviter cet inconvénient. En outre, elle conduit à une usure moins rapide de cette brosse.

Selon un autre aspect intéressant de l'outil 28 représenté sur les figures 3 et 4, celui-ci est équipé de moyens permettant de maintenir constante la distance séparant l'axe YY' de la partie la plus proche de la paroi intérieure du tube 20.

Sur les figures 3 et 4, on voit que ces moyens comprennent deux patins élastiques 54 situés dans un même plan transversal et disposés sensiblement à 60° de part et d'autre du plan passant par les axes XX' et YY', sur le côté de la cage 36 le plus éloigné de l'axe YY'. Ces patins 54 sont reliés à la cage cylindrique 36 par des lames de ressort 56 tendant à les appliquer radialement vers l'extérieur contre la paroi intérieure du tube 20. A l'opposé de ces patins 54, c'est-à-dire sur le côté de la cage 36 le plus proche de l'axe YY′, dans le plan passant par les axes XX′ et YY′ et de part et d'autre de la fenêtre 40, la cage 36 porte deux patins d'appui rigides 58.

Lorsque l'outil 28 est placé dans un tube 20, les patins élastiques 54 viennent prendre appui contre la paroi intérieure du tube de façon à appliquer les patins d'appui 58 contre la partie opposée de cette même paroi, quel que soit le diamètre intérieur du tube. Par conséquent, la distance entre l'axe YY′ et la partie de la paroi intérieure du tube la plus proche de cet axe, sur laquelle sont en appui les patins 58, reste constante.

Grâce à cette caractéristique, on assure un martèlement uniforme de la paroi intérieure des tubes quelles que soient les variations de diamètres de ces tubes.

Selon le cas, l'outil 28 peut ne comporter que deux lames souples 42 et 42′ comme représenté sur la figure 3 ou un plus grand nombre de lames. Dans ce dernier cas, qui s'applique notamment au détensionnement de tubes dudgeonnés sur toute l'épaisseur de la plaque à tubes 14, l'outil 28 peut être formé de plusieurs modules élémentaires articulés les uns sur les autres par des liaisons du type Cardan.

De préférence, et comme l'illustre également la figure 3, l'outil 28 est monté de façon démontable à l'extrémité de l'ensemble de transmission de mouvement flexible 60 qui relie l'outil 28 au sous-ensemble 32 assurant la commande des mouvements (figure 1).

De façon plus précise, dans sa partie la plus proche de l'outil 28, l'ensemble flexible 60 se compose en partant du centre d'un arbre d'entraînement flexible 62, d'une gaine d'entraînement flexible 64 à l'intérieur de laquelle peut tourner librement le câble 62 et d'un tuyau flexible formant crémaillère 66 à l'intérieur duquel est montée la gaine flexible 64.

Le tuyau flexible formant crémaillère 66 est fixé à son extrémité sur un embout de crémaillère 68, par exemple par soudage. L'extrémité de la gaine flexible 64 est également fixée dans l'embout 68 par exemple au moyen de vis 70. A son extrémité adjacente à l'embout 68, la cage 36 porte une languette élastique 72 dont l'extrémité vient se loger dans une encoche 74 formée dans une virole 73 solidaire de l'embout 68. L'outil 26 est ainsi monté de façon démontable à l'extrémité de l'ensemble flexible 60, la cage 36 étant solidarisée en rotation et en translation de la gaine 64 et du tuyau 66. Une pression sur l'extrémité de la languette 72 permet de libérer l'outil.

Dans le mode de réalisation représenté, il est à noter que l'un des patins d'appui 58 est porté par l'embout 68.

Le câble flexible 62 se prolonge dans un évidement formé à l'intérieur de l'embout 68 et porte à son extrémité un embout 76 monté de façon tournante dans l'embout 68, dans le prolongement de l'arbre 38 de l'outil. L'embout 76 est pourvu d'une saillie 76a qui pénètre dans un évidement complémentaire formé dans l'extrémité en vis-à-vis de l'arbre 38, lorsque l'outil 28 est monté à l'extrémité de l'ensemble flexible 60. L'arbre flexible 62 est ainsi solidarisé en rotation de l'arbre 38 de l'outil.

En se reportant à la figure 6, on voit que le sous-ensemble 30 servant à introduire les outils 28 à l'intérieur des tubes 20 à traiter comprend un corps 78 monté par exemple de façon amovible sur l'araignée 34. Ce corps 78 comporte autant de passages verticaux 80 que l'installation comporte d'outils 28. Chacun de ces passages 80 est prolongé vers le haut par un manchon de guidage 82 apte à être appliqué de façon étanche contre l'extrémité du tube 20 correspondant par un ressort de compression 84 prenant appui sur le corps 78. Le diamètre intérieur des manchons 82 est légèrement inférieur au diamètre intérieur des tubes 20.

Lorsque les outils 28 sont effacés à l'intérieur des manchons 82 (figure 6), ces derniers sont dégagés de la plaque 14 par le mouvement de translation verticale du corps de l'araignée 34. Le déplacement de l'araignée 34 portant l'installation selon l'invention, pour aller traiter d'autres tubes 20 est alors possible.

En-dessous de chacun des passages 80, et de part et d'autre des ensembles flexibles 60, le corps 78 supporte également un pignon fou 86 et un pignon d'entraînement 88 qui viennent s'engréner sur les faces opposées de la crémaillère formée par chacun des tuyaux flexibles 66. Chacun des pignons d'entraînement 88 est entraîné en rotation par un moteur 90 agissant sur le pignon 88 correspondant par l'intermédiaire de pignons de renvoi d'angle 92.

Grâce à cette disposition, la mise en oeuvre des moteurs 90 dans l'un ou l'autre sens a pour effet d'introduire les outils 28 dans les tubes à traiter ou, au contraire, d'extraire les outils hors de ces tubes. Ces deux opérations précèdent et suivent respectivement le traitement proprement dit.

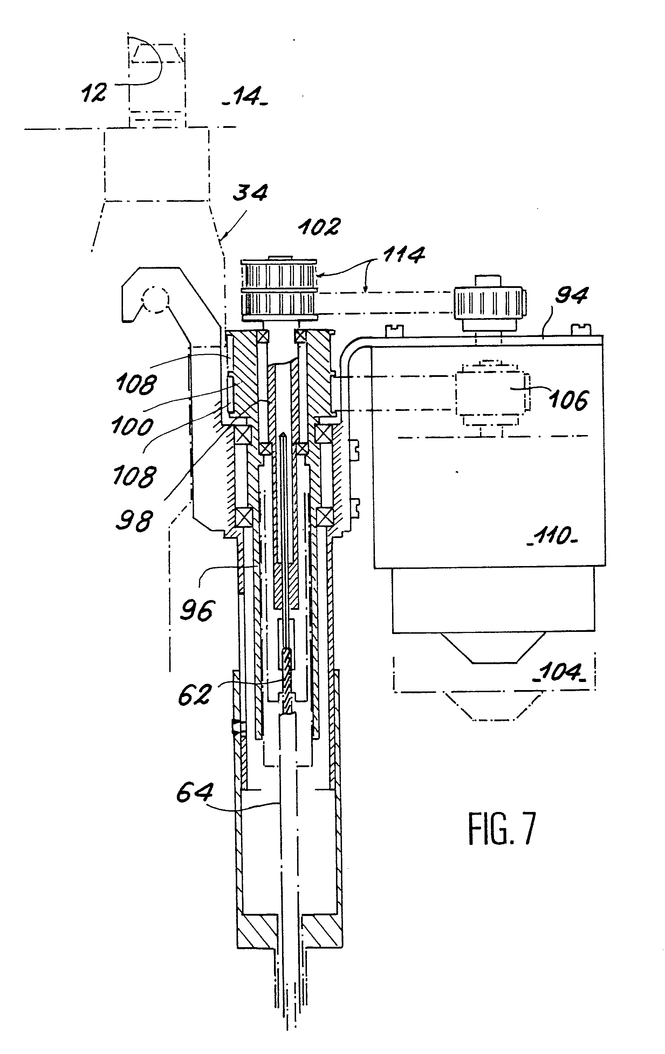

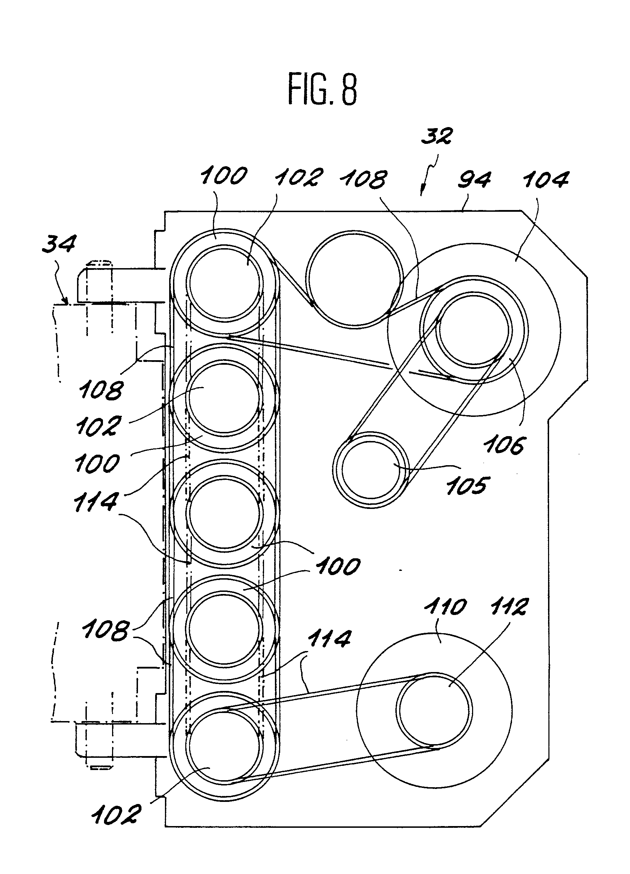

Comme l'illustrent plus précisément les figures 7 et 8, l'entraînement en rotation des arbres flexibles 62 commandant la rotation des arbres 38 de chacun des outils 28, ainsi que l'entraînement en rotation des gaines flexibles 64 commandant de la manière qui sera décrite ultérieurement le déplacement en hélice de la cage 36 de chacun des outils à l'intérieur des tubes, sont effectués à partir du sous-ensemble 32.

Ce sous-ensemble 32 comprend un corps 94 monté par exemple de façon amovible sur l'araignée 34. Ce corps 94 supporte de façon tournante quatre arbres creux verticaux 96 à l'intérieur desquels sont également reçus de façon tournante cinq arbres 98. Les extrémités inférieures de chacun des arbres creux 96 sont solidarisées des extrémités correspondantes des gaines flexibles 64. De même, les extrémités inférieures de chacun des arbres 98 sont solidarisées des extrémités correspondantes des arbres flexibles 62.

Une poulie double crantée 100 est solidarisée de l'extrémité supérieure de chacun des arbres creux 96. L'extrémité supérieure de chacun des arbres 98 fait saillie au-dessus de cette poulie 100 et est également solidarisée d'une poulie double crantée 102.

L'entraînement en rotation de l'ensemble des arbres creux 96 est commandé par un moteur électrique 104, du type moteur couple, porté par le corps 94 et dont l'arbre de sortie vertical porte une poulie crantée 106. Un ensemble de courroies crantées 108 assure la transmision aux poulies crantées 102 du mouvement de rotation imparti à la poulie crantée 106 par le moteur 104. On entraîne ainsi simultanément en rotation à la même vitesse l'ensemble des gaines flexibles 64. A titre d'exemple, cette vitesse de rotation est comprise entre 7 et 20 tours par minute.

La vitesse de rotation ainsi obtenue est contrôlée de préférence par une génératrice tachimétrique 105, le nombre de tours étant compté par un codeur 107.

De façon comparable, un moteur électrique 110, egalement du type moteur couple, est supporté par le corps 94 et commande la rotation d'une poulie crantée 112 dont le mouvement de rotation est transmis aux poulies crantées 102 par un ensemble de courroies crantées 114. On entraîne ainsi simultanément en rotation l'ensemble des câbles flexibles 62 à la même vitesse, comprise de préférence entre 2000 et 4500 tours par minute. Cette vitesse est également contrôlée par une génératrice tachimétrique (non représentée).

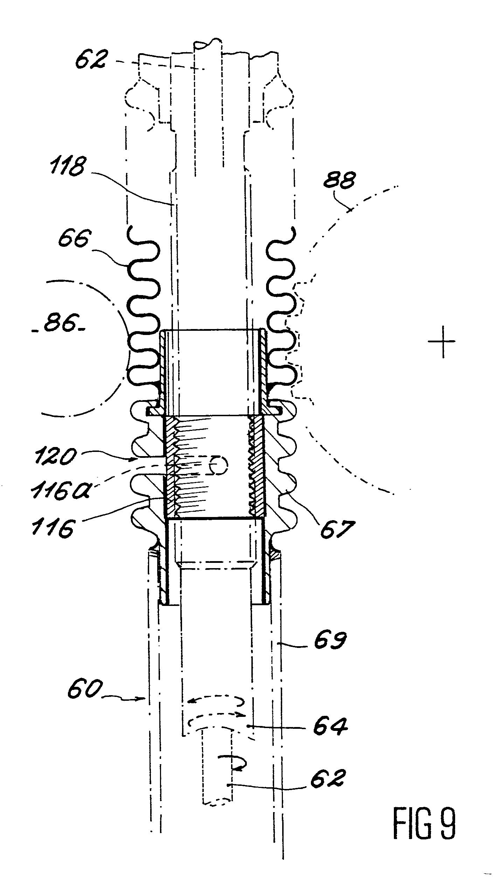

Pour transformer le mouvement de rotation imparti à chacune des gaines flexibles 64 en un mouvement d'avance hélicoïdal de l'outil 28 à l'intérieur du tube à traiter, on voit sur la figure 9 que la partie de l'ensemble flexible 60 qui se trouve engrénée sur la roue dentée 88 (figure 6) lorsque l'outil 28 est en position de travail présente une structure particulière.

De façon plus précise, le tuyau flexible 66 formant crémaillère est prolongé à ce niveau par un manchon 67 dont la surface extérieure est crénelée au même pas que le tuyau 66. Ce manchon 67 est interposé entre le tuyau flexible et un tuyau flexible 69 dont l'extrémité opposée est fixée sur le corps 94 du sous-ensemble 32. Le manchon 67 est fixé, par exemple par soudage, à l'extrémité de ce tuyau 69, de sorte qu'il est immobilisé en rotation, alors que le tuyau crénelé 66 tourne avec la gaine 64.

Un écrou 116 est monté dans le manchon 67 et vissé sur une tige filetée 118 solidaire à cet endroit de la gaine flexible 64. De façon plus précise, l'écrou 116 est monté dans le manchon 67 de façon à pouvoir tourner librement d'un demi tour par rapport à ce manchon, puis à être immobilisé en rotation dans le manchon 67. A cet effet, l'écrou 116 porte sur sa face extérieure un pion 116a orienté radialement vers l'extérieur et pénétrant dans une rainure en demi-cercle 120 formée dans le manchon 67.

Le manchon 67 est immobilisé en rotation par le tuyau 69 et immobilisé en translation par suite de son engrènement sur le pignon 88 lorsque l'outil est en position de travail. L'entraînement en rotation de la gaine flexible 64 commandée par le moteur 104 du sous-ensemble 32 a donc pour effet de visser la partie filetée 118 dans l'écrou 116. Le mouvement de rotation imparti à la gaine 64 est ainsi transformé en un mouvement hélicoïdal dont le pas correspond au pas de l'hélice de la partie filetée 118 et de l'écrou 116. La mise en oeuvre du moteur 104 a donc pour conséquence de déplacer la cage 36 de chacun des outils 28 selon un trajet en hélice centré sur l'axe ZZ' du tube à traiter. Etant donné qu'au cours de ce mouvement, l'arbre 38 de chacun des outils est également entraîné en rotation par le moteur 110, on réalise ainsi un martelage de la paroi intérieure des tubes à l'aide des billes 44 selon un trajet en hélice assurant une répartition parfaitement régulière des impacts.

Lorsque le trajet aller en hélice est terminé, on inverse le sens de rotation du moteur 104 et, par conséquent, de chacune des gaines flexibles 64. Lors de cette inversion de mouvement, le pion 116a qui était en butée contre l'une des extrémités de la rainure 120 est entraîné en rotation en sens inverse et effectue un demi-tour pour venir en butée sur l'autre extrémité de la rainure 120. Pendant ce demi-tour, la cage de l'outil tourne également d'un demi-tour sans se déplacer axialement.

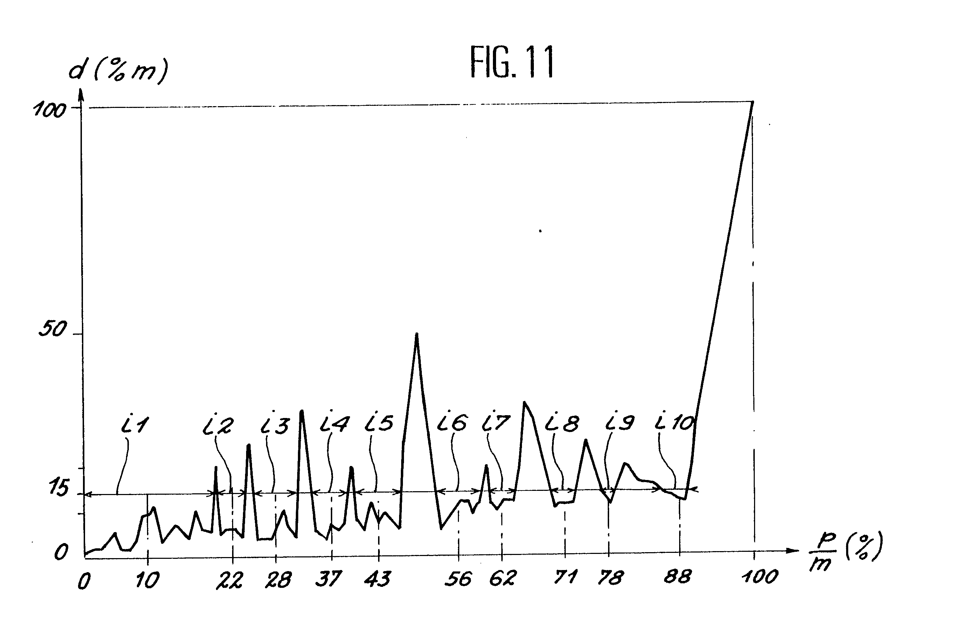

Grâce à cette caractéristique, le trajet retour des outils 28 à l'intérieur des tubes s'effectue selon une hélice de pas identique, mais décalée d'un demi-pas par rapport à l'hélice du trajet aller. Le trajet ainsi suivi par l'outil à l'intérieur du tube 20 à traiter est représenté très schématiquement par la ligne F2 sur la figure 10, sur laquelle le pas de l'hélice a été volontairement très agrandi.

Grâce à ce décalage d'un demi-pas, le nombre des impacts est doublé, et les impacts du trajet retour sont situés à égale distance des impacts du trajet aller.

De préférence, et conformément à une caractéristique avantageuse de l'invention, on détermine le pas des filets de la partie filetée 118 et de l'écrou 116, désigné par $p$, en fonction de la distance moyenne $m$ séparant deux microbilles 44 et 44' sur les lames souples 42 et 42'. Cette détermination est faite afin d'éviter que les impacts de deux microbilles distinctes ne se superposent, comme cela serait notamment le cas lorsque le rapport p/m était égal à 1, 1/2, 1/3, 2/3, 1/4 ou 3/4.

Sur la figure 11, on a représenté les variations de la distance maximum $d$ entre deux impacts, selon une génératrice du tube, exprimées en pourcentage de la distance moyenne $m$, en fonction du rapport p/m, exprimé également en pourcentage. On voit que cette distance $d$ est la plus grande lorsque le rapport p/m a l'une des valeurs données au paragraphe précédent.

Selon l'invention, on donne à ce rapport p/m une valeur telle que la distance maximum $d$ soit aussi faible que possible, par exemple inférieure à 15% de $m$. Cela conduit à situer le rapport p/m dans l'un des intervalles désignés par les références $i_1$ à $i_{10}$ sur la figure 11. De façon plus précise, compte tenu du fait que les distances réelles entre les microbilles peuvent présenter des différences par rapport à la distance moyenne $m$, on donne au rapport p/m une valeur voisine de celle qui correspond au milieu de ces intervalles, c'est-à-dire voisine de 10%, 22%, 28%, 37%, 43%, 56%, 62%, 71%, 78% ou 88%.

De préférence, afin que le traitement soit rapide, on donne au rapport p/m une valeur aussi grande que possible. Par ailleurs, on évite autant que possible de placer le rapport p/m dans un intervalle $i_1$ à $i_{10}$ trop étroit, car la distance séparant certaines microbilles pourrait être située en dehors de cet intervalle. Cela conduit à donner au rapport p/m une valeur située vers le milieu de l'intervalle $i_6$, c'est-à-dire voisine de 56%.

Bien entendu, l'invention n'est pas limitée au mode de réalisation qui vient d'être décrit à titre d'exemple, mais en couvre toutes les variantes.

En particulier, on comprendra aisément que les sous-ensembles 30 et 32 peuvent être soit montés directement de façon rigide sur l'araignée 34, soit conçus pour être fixés sur l'araignée alors que celle-ci est déjà en place.

Par ailleurs, on a vu que la longueur de l'outil et le nombre de brosses qu'il supporte sont variables selon la longueur du tube à traiter. De ce point de vue, on remarquera que le traitement d'un tube dudgeonné sur toute l'épaisseur de la plaque à tubes peut se faire au moyen d'un outil de grande longueur constitué de plusieurs modules élémentaires articulés les uns sur les autres par des joints de cardan. De façon plus précise, chaque module peut être constitué par un élément de cage rigide terminé à ses extrémités par des éléments de cardan et dans lequel est logé à rotation un élément d'arbre rigide également terminé à ses extrémités par des éléments de cardan. Les joints de cardan reliant les éléments d'arbre sont alors logés dans les joints de cardan reliant les éléments de cage. Cependant, pour tenir compte du décalage existant entre les axes des éléments d'arbre et de cage, les joints de cardan reliant les éléments d'arbre présentent un certain jeu radial.

A titre d'exemple nullement limitatif, chacun des modules d'un tel outil de grande longueur peut être équipé de deux brosses. Le module de tête ou d'extrémité comprend alors une brosse libre et une brosse en cage, alors que les autres modules comprennent deux brosses en cage. Les différents modules peuvent être reliés entre eux par des liaisons démontables permettant d'adapter la longueur de l'outil à la longueur du tube à traiter.

Dans le cas d'un tel outil de grande longueur, il faut noter que les moyens 88, 90 permettant d'introduire et d'extraire l'outil du tube à traiter doivent nécessairement être plus éloignés de la plaque à tubes 14 que dans l'exemple de réalisation décrit précédemment. A cet effet, le sous-ensemble porte-outils 30 comprend alors une première partie portée par l'araignée et comportant les manchons de guidage des outils. Le corps de cette première partie est relié par des tubes, situés dans le prolongement des manchons de guidage et dans lesquels peuvent être escamotés les outils, à des corps dans lesquels sont montés les moyens d'introduction et d'extraction constitués par les moteurs 90 et par les engrenages associés 86, 88 et 92. Ces tubes sont fixés rigidement aux corps de la première partie et des moyens d'introduction et d'extraction à leurs extrémités.

Enfin, l'installation peut être conçue indifféremment pour traiter seulement un tube ou simultanément plusieurs tubes. Dans ce dernier cas, elle comprend plusieurs outils.

## Revendications

1. Installation pour le détensionnement de tubes dudgeonnés (20), comprenant :
- un outil (28) constitué d'une cage cylindrique (36) ayant un axe donné (XX'), d'un arbre (38) monté tournant à l'intérieur de ladite cage autour d'un axe (YY') parallèle et décalé par rapport à l'axe de la cage, et d'au moins une lame souple (42) fixée sur ledit arbre (38) en face d'une fenêtre (40) ouverte dans une partie de la cage (36) proche de l'axe de l'arbre, ladite lame portant au moins une rangée de microbilles (44) à son extrémité,
- des moyens de commande de martelage (110) pour entraîner ledit arbre (38) en rotation autour de on axe (YY'),

- des moyens de commande de balayage (104, 116, 118) pour entraîner la cage (36) en rotation et en translation à l'intérieur d'un tube (20) à traiter, ayant un axe (ZZ') parallèle aux axes (XX', YY') de la cage (36) et de l'arbre (38),
cette installation étant caractérisée en ce que les moyens de commande de balayage (104, 116, 118) déplacent la cage selon une trajectoire en hélice (F2) centrée sur l'axe (ZZ') du tube à traiter.

2. Installation selon la revendication 1, caractérisée en ce que les moyens de commande de balayage comprennent une tige filetée (118) solidarisée en rotation et en translation de ladite cage (36), un écrou (116) monté dans un organe support (67) apte à être immobilisé par rapport au tube (20), cet écrou étant vissé sur la tige filetée, et des moyens de commande de rotation (104) pour entraîner la tige filetée (118) en rotation.

3. Installation selon l'une quelconque des revendications 1 et 2, caractérisée en ce qu'elle comprend de plus des moyens (116a, 120) pour décaler la trajectoire en hélice (F2) d'environ un demi-pas de cette hélice, selon que la translation de la cage (36) selon son axe (XX') s'effectue dans l'un ou l'autre sens.

4. Installation selon les revendications 2 et 3, caractérisée en ce que les moyens pour décaler la trajectoire en hélice d'environ un demi-pas consistent en des moyens (116a, 120) pour faire tourner l'écrou (116) d'environ un demi-tour dans l'organe support (67) lors d'une inversion de sens de rotation des moyens de commande de rotation (104).

5. Installation selon l'une quelconque des revendications 2 et 4, caractérisée en ce qu'elle comprend un sous-ensemble de commande (26) portant les moyens de commande de martelage (110) et les moyens de commande de rotation (104), un sous-ensemble porte-outils (30), un arbre d'entraînement flexible (62) reliant lesdits moyens de commande de martelage (110) à l'arbre (38) de l'outil (28) et une gaine d'entraînement flexible (64) entourant l'arbre d'entraînement (62) reliant les moyens de commande de rotation (104) à la cage (36) et comprenant la tige filetée (118).

6. Installation selon la revendication 5, caractérisée en ce que le sous-ensemble porte-outils (30) porte des moyens (88, 90) pour introduire et extraire l'outil (28) d'un tube à traiter, ces derniers moyens comprenant un pignon d'entraînement (88) qui s'engrène sur une surface crénelée formée sur ledit organe support (67) et sur une enveloppe flexible (66) placée autour de la gaine d'entraînement flexible (64) entre cet organe support et la cage de l'outil.

7. Installation selon l'une quelconque des revendications 1 à 6, caractérisée en ce que, l'hélice ayant un pas p et les microbilles (44) d'une même série étant séparées par une distance moyenne m, le rapport p/m exprimé en % est voisin de l'une des valeurs suivantes : 10, 22, 28, 37, 43, 56, 62, 71, 78 et 88.

8. Installation selon la revendication 7, caractérisée en ce que le rapport p/m, exprimé en %, est voisin de 56.

9. Installation selon l'une quelconque des revendications 1 à 8, caractérisée en ce que l'arbre (38) de l'outil comporte un prolongement au-delà de l'extrémité de la cage (36), ce prolongement supportant une deuxième lame souple (42') portant des microbilles (44') à son extrémité.

10. Installation selon l'une quelconque des revendications 1 à 9, caractérisée en ce que ladite cage (36) porte au moins deux patins élastiques (54) aptes à prendre appui à l'intérieur d'un tube (20) pour appliquer la génératrice de la cage (36) la plus proche de l'axe (YY') de l'arbre (38) contre le tube.

11. Installation selon l'une quelconque des revendications 1 à 10, caractérisée en ce que des moyens de démontage (72, 74, 76) de l'outil (28) sont prévus.

12. Installation selon l'une quelconque des revendications 1 à 11, caractérisée en ce que chaque lame souple (42, 42') est reçue dans une fente (48) formée dans l'arbre (38) de l'outil, et fixée à cet arbre de façon démontable par au moins une vis (50) traversant la lame, dont la tête prend appui sur l'arbre (38) d'un côté de la lame, et dont l'extrémité est vissée dans une pièce (52) coulissant dans l'arbre (38) de l'autre côté de la lame.

13. Installation selon l'une quelconque des revendications 1 à 12, caractérisée en ce que le diamètre des microbilles (44) est inférieur à la différence entre le diamètre intérieur du tube (20) à traiter et le diamètre extérieur de la cage (36).

14. Installation selon l'une quelconque des revendications 1 à 13, caractérisée en ce que l'outil (28) est formé de plusieurs modules comprenant chacun un élément de cage et un élément d'arbre, les éléments de cage et les éléments d'arbre des modules adjacents étant reliés par des joints de cardan logés les uns dans les autres.

FIG. 1

0 291 609

FIG. 2

FIG. 5

FIG. 10

FIG. 3

FIG. 4

0 291 609

FIG. 6

FIG. 7

# FIG. 8

62

118

88

66

-86-

120

116a

116

67

69

60

64

62

FIG 9

FIG. 11

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-3 648 498  (VOSS et al.)<br>* Colonne 2, lignes 29-50; figures *<br>--- | 1 | B 24 B   39/00<br>C 21 D    7/06<br>B 23 P    9/04 |
| D,Y | GB-A-2 104 821  (WESTINGHOUSE)<br>* Revendications; figures *<br>--- | 1 | |
| A | EP-A-0 082 519  (KAWASAKI)<br>* Abrégé; figures *<br>--- | 1,2,5 | |
| A | GB-A-2 159 085  (WESTINGHOUSE)<br>* Abrégé; figures *<br>--- | 1,14 | |
| A | DE-A-1 477 915  (ULVSUNDA)<br>* Figure 2; page 6 *<br>--- | 1,10 | |
| A . | DE-A-2 246 942  (BAUER)<br>* Figures *<br>----- | 1,10 | |

**DOMAINES TECHNIQUES RECHERCHES (Int. Cl.4)**

B 24 B
C 21 D
B 23 P

Le présent rapport a été établi pour toutes les revendications

| Lieu de la recherche | Date d'achèvement de la recherche | Examinateur |
|---|---|---|
| LA HAYE | 19-01-1988 | ESCHBACH D.P.M. |

EPO FORM 1503 03.82 (P0402)